(19) Europäisches Patentamt
European Patent Office
Office européen des brevets

(11) **EP 4 770 195 A1**

(12) **EUROPEAN PATENT APPLICATION**
published in accordance with Art. 153(4) EPC

(43) Date of publication:
**01.07.2026  Bulletin 2026/27**

(21) Application number: **24870896.8**

(22) Date of filing: **26.09.2024**

(51) International Patent Classification (IPC):
*H04W 36/00* ^(2009.01)

(52) Cooperative Patent Classification (CPC):
**H04W 36/00; H04W 36/08**

(86) International application number:
**PCT/CN2024/121502**

(87) International publication number:
**WO 2025/067357 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023  CN 202311290105**

(71) Applicant: **HUAWEI TECHNOLOGIES CO., LTD.
Shenzhen, Guangdong 518129 (CN)**

(72) Inventor: **Yuan, Shitong
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57)     This application provides a communication method and a communication apparatus. The method includes: receiving first information from a first network device, where a first cell belongs to the first network device, the first cell is a serving cell currently accessed by a terminal device, the first information includes a first field, and the first field indicates a candidate cell, or indicates the candidate cell and the serving cell currently accessed by the terminal device; and determining the first cell or a second cell based on the first information and a first rule, where the second cell is the candidate cell, and the first rule indicates a correspondence between the first field and the candidate cell, or indicates the correspondence between the first field and the candidate cell and a correspondence between the first field and the serving cell currently accessed by the terminal device. According to the communication method and the communication apparatus in this application, when the terminal device accesses the first cell, a candidate cell or a serving cell for which a timing advance needs to be obtained is determined based on an explicit indication of a field in the first information, to prepare for flexible handover of the terminal device between a plurality of cells.

<u>200</u>

FIG. 2

# Description

This application claims priority to Chinese Patent Application No. 202311290105.0, filed with the China National Intellectual Property Administration on September 28, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

In a mobile communication system, a terminal device may be handed over between different cells under control of a network device. Currently, the network device may indicate, based on downlink control signaling, the terminal device to initiate a random access request to a neighboring cell. It can be learned that whether the terminal device can efficiently implement flexible handover between cells depends on an explicit indication from the network device.

Therefore, how to explicitly indicate the terminal device to perform handover to a corresponding cell, to implement flexible and efficient handover of the terminal device between a plurality of cells is an urgent problem to be resolved currently.

## SUMMARY

This application provides a communication method and a communication apparatus. In the method, a terminal device may implement flexible handover between a plurality of cells through an explicit indication from a network device.

According to a first aspect, a communication method is provided, including: receiving first information from a first network device, where a first cell belongs to the first network device, the first cell is a serving cell currently accessed by a terminal device, the first information includes a first field, and the first field indicates a candidate cell, or the first field indicates the candidate cell and the serving cell currently accessed by the terminal device; and determining the first cell or a second cell based on the first information and a first rule, where the second cell is the candidate cell, the second cell belongs to the first network device, or the second cell belongs to a second network device, and the first rule indicates a correspondence between the first field and the candidate cell, or the first rule indicates the correspondence between the first field and the candidate cell and a correspondence between the first field and the serving cell currently accessed by the terminal device.

For example, the first information may be downlink control indication (downlink control indication, DCI) signaling delivered by the first network device to the terminal device through a downlink control channel (physical downlink control channel, PDCCH), and a DCI includes a field indicating a candidate cell. For example, the field may be a "cell indicator" field.

The first rule may be replaced with "a correspondence", "an association relationship", or the like. The first rule may further indicate a correspondence between a value of the first field and an identifier of the candidate cell. The first rule may further indicate a correspondence between the value of the first field and a physical identity of the candidate cell. The first rule may further indicate a correspondence between the value of the first field and a logical identifier of the candidate cell.

It should be understood that, when the first rule indicates the correspondence between the first field and the candidate cell, the terminal device may determine the second cell based on the first information and the first rule; or when the first rule indicates the correspondence between the first field and the candidate cell and the correspondence between the first field and the serving cell currently accessed by the terminal device, the terminal device may determine the first cell and/or the second cell based on the first information and the first rule.

It should be noted that the first rule may indicate a correspondence between the first field and a cell. The cell may be the candidate cell, or may be the candidate cell and the serving cell currently accessed by the terminal device. With handover of the terminal device, the serving cell currently accessed by the terminal device may also change. A cell accessed by the terminal device before handover may be understood as the serving cell currently accessed by the terminal device, and a cell accessed by the terminal device after handover may be understood as a serving cell to which the terminal device is handed over. After the terminal device is handed over, the serving cell to which the terminal device is handed over may also be understood as the serving cell currently accessed by the terminal device, where "current" after handover may refer to a different moment from "current" before handover.

It should be understood that, when the second cell belongs to the first network device, this corresponds to a scenario in which the terminal device is handed over between cells within the first network device; and when the second cell belongs to the second network device, this corresponds to a scenario in which the terminal device is handed over between cells in a plurality of network devices.

Based on the foregoing solution, when accessing the first cell, the terminal device may determine, based on the first information from the first network device in the first cell and an explicit indication of a field in the first information, a candidate cell or a serving cell for which a timing advance needs to be obtained, to prepare for flexible handover of the terminal device between a plurality of cells.

With reference to the first aspect, in some implementations of the first aspect, the method further includes: sending a random access request message 1 (a preamble) to the first cell or the second cell based on the first information and the first rule.

Based on the foregoing solution, the terminal device may determine, according to the first rule and under the explicit indication of the first information, to send the random access request message 1 (the preamble) to a candidate cell, so that the network device obtains a timing advance of the terminal device in a corresponding cell.

With reference to the first aspect, in some implementations of the first aspect, the first cell is a cell configured with a random access resource configuration; the first rule includes: a first field of a first value corresponds to the first cell, and a first field of another value corresponds to a different candidate cell; and the first information includes a first field of a second value.

For example, the random access resource configuration may be a layer 1/layer 2 triggered mobility (L1/L2 triggered mobility, LTM) random access resource configuration. The first cell is a cell configured with the random access resource, and it may be understood that the first cell may also be used as a candidate cell of the terminal device. After the terminal device is handed over from the first cell to another cell, the terminal device may be further handed over back from the another cell to the first cell.

It should be understood that first fields of other values are in one-to-one correspondence with different candidate cells. The terminal device may initiate random access to the different candidate cells based on the first fields of the other values and the first rule. A configuration of the candidate cell may include a configuration of the serving cell currently accessed by the terminal device and a corresponding random access resource. To be specific, when the value of the first field indicates the terminal device to initiate a random access request to the candidate cell, because the configuration of the candidate cell includes the configuration of the serving cell currently accessed by the terminal device, the terminal device may also be triggered to initiate access to the currently accessed serving cell. When the first field of the first value (for example, a minimum value of the first field) corresponds to the serving cell currently accessed by the terminal device, in addition to the first field of the first value, the first field of the another value may also trigger the terminal device to initiate a random access request to the currently accessed serving cell.

It may be understood that the first information may further include the first field of the another value. This is not limited in this application.

Based on the foregoing solution, the terminal device may determine, based on first fields of different values, a candidate cell to which the terminal device is to be handed over, so that random access can be initiated to different candidate cells. In addition, because the serving cell currently accessed by the terminal device is also configured with a random access resource configuration, after the terminal device is handed over from the currently accessed serving cell to the candidate cell, the terminal device can be further handed over back to the original serving cell, to implement flexible handover of the terminal device between different cells.

With reference to the first aspect, in some implementations of the first aspect, initiating random access to the first cell or the second cell based on the first information and the first rule includes: sending the random access request message 1 to the first cell based on the first field of the first value and the first rule.

With reference to the first aspect, in some implementations of the first aspect, initiating random access to the first cell or the second cell based on the first information and the first rule includes: sending the random access request message 1 to the different candidate cell based on the first field of the another value and the first rule.

Based on the foregoing solution, in the first rule, when the first field of the first value corresponds to the first cell, and the first field of the second value corresponds to the second cell, the terminal device may determine, based on the first fields of the different values, the candidate cell to which the terminal device is to be handed over, and send the random access request message 1 to the candidate cell to which the terminal device is to be handed over.

With reference to the first aspect, in some implementations of the first aspect, after the terminal device is handed over from the first cell to the second cell, the first cell is the candidate cell, the second cell is a serving cell to which the terminal device is handed over, and the first rule includes: A first field of a third value corresponds to the first cell, and a first field of a fourth value corresponds to the second cell, where the first rule is determined based on an order of candidate cells configured with a random access resource configuration.

It should be understood that the candidate cell configured with the random access resource may be understood as that the random access resource configuration of the candidate cell is included in an LTM candidate cell random access resource configuration. The first cell accessed by the terminal device before handover is also configured with a random access resource, and the random access resource configuration of the first cell is also included in the LTM candidate cell random access resource configuration.

For example, before and after the terminal device is handed over, the order of the candidate cells configured with the random access resource is fixed. Therefore, a correspondence between different values and candidate cells in the first rule is fixed. For example, a first field of a value '00' corresponds to a cell 1 before and after handover, and a first field of a value '01' corresponds to a cell 2 before and after handover.

It should be noted that, before being handed over to the second cell, the terminal device is connected to the first network device in the first cell. That the first cell is a cell configured with the random access resource configuration may be understood as that the random access resource configuration of the first cell is also the random access resource configuration of the candidate cell. For example, a random access channel (random access channel, RACH) resource of the first cell is included in an LTM configuration. In this case, mapping of a value of a DCI field is mapping of the correspondence between the first field and the candidate cell, and the mapping may be performed based on an order in a list of candidate cells whose LTM configurations include the RACH resource (an ascending order of logical identifiers of the candidate cells configured with the random access resource). The correspondence between the first field and the candidate cell may also be understood as a correspondence between the value of the first field and the candidate cell.

For example, when the correspondence between the value of the first field and the candidate cell is mapped based on the order in the list of candidate cells whose LTM configurations include the RACH resource, during handover of the terminal device between the cells, values of the first field are in one-to-one correspondence with the candidate cells, and such correspondence does not change with handover of the terminal device, unless the list of the candidate cells for LTM is reconfigured through radio resource control (radio resource control, RRC). That the values of the first field are in one-to-one correspondence with the candidate cells may be understood as that the values of the first field are in one-to-one correspondence with physical identities (physical cell identity, PCI) of the candidate cells.

With reference to the first aspect, in some implementations of the first aspect, the first field of the second value corresponds to the second cell, and the fourth value is a minimum value.

It should be understood that after the terminal device is handed over from the first cell to the second cell, the second cell is the serving cell to which the terminal device is handed over. Before and after the terminal device is handed over, the order of the candidate cells configured with the random access resource is fixed. Therefore, the correspondence between different values and candidate cells in the first rule is fixed. The candidate cells may include a serving cell of the terminal device (for example, the second cell accessed by the terminal device after handover), and different values may be understood as values other than the minimum value. A first field of the minimum value may correspond to the serving cell of the terminal device (for example, the first field of the minimum value corresponds to the first cell from which the terminal device is handed over, or may correspond to the second cell to which the terminal device is handed over). It can be learned that the serving cell of the terminal device may correspond to first fields of two values, including the first field of the minimum value, and may further include a first field of a value that is determined before handover based on an order of the cell in the candidate cells configured with the random access resource.

For example, the terminal device accesses a cell 1 before handover. The cell 1 corresponds to a first field of a value '00' and corresponds to a first field of a value '01'. A cell 2, as a candidate cell, corresponds to a first field of a value '10'. After the terminal device is handed over from the cell 1 to the cell 2, the cell 2 corresponds to the first field of the value '00', and corresponds to the first field of the value '10', and the cell 1 corresponds to the first field of the value '01'. It can be learned that, after the terminal device is handed over, the cell 2 is used as the serving cell of the terminal device, and may correspond to the first field of the minimum value ('00'), and may correspond to the first field of an original value ('10') before handover.

With reference to the first aspect, in some implementations of the first aspect, after the terminal device is handed over from the first cell to the second cell, the first cell is the candidate cell, the second cell is a serving cell to which the terminal device is handed over, and the first rule is updated as follows: The first field of the first value corresponds to the second cell, and a first field of a fifth value corresponds to the first cell.

It should be understood that, before the terminal device is handed over, the first field of the first value corresponds to the first cell; and after the terminal device is handed over, the first field of the first value corresponds to the second cell. The first field of the first value corresponds to the serving cell of the terminal device. Because the terminal device is handed over, the serving cell of the terminal device changes continuously, and a cell corresponding to the first field of the first value also changes continuously with handover of the terminal device.

It should be noted that, before being handed over to the second cell, the terminal device is connected to the first network device in the first cell. That the first cell is a cell configured with the random access resource configuration may be understood as that the random access resource configuration of the first cell is also the random access resource configuration of the candidate cell. For example, the random access resource configuration of the first cell is also included in an LTM candidate cell random access resource configuration.

Based on the foregoing solution, after the terminal device is handed over from the first cell to the second cell, the first field of the first value is updated from corresponding to the first cell to corresponding to the second cell. In addition, the first cell is updated to corresponding to the first field of the fifth value. The fifth value may be the same as the second value, or may be different from the second value. Whether the fifth value is the same as the second value is related to one of an order of candidate cells configured with the random access resource, a first order, a correspondence of the first field of the second value, and an order of identifiers of the candidate cells.

With reference to the first aspect, in some implementations of the first aspect, an updated first rule is related to one of the following: the order of the candidate cells configured with the random access resource configuration, the first order, the correspondence of the first field of the second value, and the order of the identifiers of the candidate cells.

It should be understood that the updated first rule is determined based on one of the following: the order of the candidate cells configured with the random access resource, the first order, the correspondence of the first field of the second value, and the order of the identifiers of the candidate cells.

The first order may be an initial default order, or may be an order predefined according to a specific rule. The order of the identifiers of the candidate cells may also be an order of physical identities of the candidate cells.

It should be noted that, when the updated first rule is related to the order of the candidate cells configured with the random access resource, the fifth value may be different from the second value; when the updated first rule is related to the first order, the fifth value may be different from the second value; when the updated first rule is related to the correspondence of the first field of the second value, the fifth value is the same as the second value; or when the updated first rule is related to the order of the identifiers of the candidate cells, the fifth value may be different from the second value.

Based on the foregoing solution, when the terminal device is handed over between different cells, the first rule may be dynamically updated based on the order of the candidate cells configured with the random access resource configuration, the first order, the correspondence of the first field of the second value, the order of the identifiers of the candidate cells, and the like. A random access resource configuration of an original serving cell accessed by the terminal device is also the random access resource configuration of the candidate cell, so that the terminal device can be flexibly handed over between different candidate cells.

With reference to the first aspect, in some implementations of the first aspect, the order of the candidate cells configured with the random access resource configuration is determined based on an ascending order of logical identifiers of the candidate cells configured with the random access resource.

It may also be understood that the order of the candidate cells configured with the random access resource configuration is related to the ascending order of the logical identifiers of the candidate cells configured with the random access resource.

With reference to the first aspect, in some implementations of the first aspect, when the first field of the first value corresponds to the serving cell currently accessed by the terminal device or corresponds to the serving cell to which the terminal device is handed over, the first value is a minimum value.

It should be understood that, when the first field of the first value corresponds to the first cell accessed by the terminal device before handover or the second cell to which the terminal device is handed over, the first value is the minimum value. The first value as the minimum value may be a minimum value of an N-bit binary number, where N is greater than or equal to 1, or may be a minimum value of a decimal number. For example, the first value may be '0', '00', or '000'.

Based on the foregoing solution, it may be preset in the first rule that the first field of the minimum value corresponds to the serving cell of the terminal device. As the serving cell of the terminal device changes, a cell corresponding to the first field of the minimum value also changes, and a cell corresponding to the first field of the another value may also change accordingly.

With reference to the first aspect, in some implementations of the first aspect, the first information includes a second field, and the second field indicates whether the terminal device is to trigger sending of a random access request message 1 to the first cell.

It should be understood that the first information may further include the second field indicating whether the terminal device is to trigger sending of the random access request message 1 to the currently accessed serving cell. The second field may be 1 bit newly added to the first information.

Optionally, the second field may be enabled or disabled in a DCI format configured through RRC.

Based on the foregoing solution, the terminal device may be explicitly indicated, by using the second field in the first information, to be handed over to a candidate cell, or trigger access to the current serving cell, so that the terminal device can be flexibly handed over between different cells.

With reference to the first aspect, in some implementations of the first aspect, when a value of the second field is a sixth value, the first field is a padding field, and the determining the second cell based on the first information and the first rule includes: determining, based on the second field in the first information, to send the random access request message 1 to the first cell.

For example, when the sixth value is 1, the second field indicates that the terminal device can trigger random access to the currently accessed serving cell (the first cell). In this case, the value of the first field may be considered meaningless, and the terminal device may ignore the first field, or consider the first field as a padding bit. The PDCCH used for transmission of the first information only indicates a random access resource of the currently accessed serving cell (the first cell).

With reference to the first aspect, in some implementations of the first aspect, when a value of the second field is a seventh value, before the determining the second cell based on the first information and the first rule, the method further includes: determining, based on the second field in the first information, not to send the random access request message 1 to the first cell.

For example, when the seventh value is 0, the second field indicates that the terminal device cannot trigger random access to the currently accessed serving cell (the first cell). In this case, the currently accessed serving cell is not the candidate cell, the PDCCH used for transmission of the first information only indicates a random access resource of the candidate cell, and the value of the first field corresponds to a candidate cell including a RACH.

According to a second aspect, a communication method is provided, including: A first network device sends first information to a terminal device, where the first information indicates the terminal device to determine a first cell or a second cell according to a first rule, the first cell belongs to the first network device, the first cell is a serving cell currently accessed by the terminal device, the first information includes a first field, and the first field indicates a candidate cell, or the first field indicates the candidate cell and the serving cell currently accessed by the terminal device; and the second cell is the candidate cell, the second cell belongs to the first network device, or the second cell belongs to a second network device, and the first rule indicates a correspondence between the first field and the candidate cell, or the first rule indicates the correspondence between the first field and the candidate cell and a correspondence between the first field and the serving cell currently accessed by the terminal device.

With reference to the second aspect, in some implementations of the second aspect, the first cell is a cell configured with a random access resource configuration; the first rule includes: a first field of a first value corresponds to the first cell, and a first field of another value corresponds to a different candidate cell; and the first information includes a first field of a second value.

With reference to the second aspect, in some implementations of the second aspect, after the terminal device is handed over from the first cell to the second cell, the first cell is the candidate cell, the second cell is a serving cell to which the terminal device is handed over, and the first rule includes: A first field of a third value corresponds to the first cell, and a first field of a fourth value corresponds to the second cell, where the first rule is determined based on an order of candidate cells configured with a random access resource configuration.

With reference to the second aspect, in some implementations of the second aspect, the first field of the second value corresponds to the second cell, and the fourth value is a minimum value.

With reference to the second aspect, in some implementations of the second aspect, after the terminal device is handed over from the first cell to the second cell, the first cell is the candidate cell, the second cell is a serving cell to which the terminal device is handed over, and the first rule is updated as follows: The first field of the first value corresponds to the second cell, and a first field of a fifth value corresponds to the first cell.

With reference to the second aspect, in some implementations of the second aspect, an updated first rule is related to one of the following: the order of the candidate cells configured with the random access resource configuration, a first order, a correspondence of the first field of the second value, and an order of identifiers of the candidate cells.

With reference to the second aspect, in some implementations of the second aspect, the order of the candidate cells configured with the random access resource configuration is determined based on an ascending order of logical identifiers of the candidate cells configured with the random access resource.

With reference to the second aspect, in some implementations of the second aspect, when the first field of the first value corresponds to the serving cell currently accessed by the terminal device or corresponds to the serving cell to which the terminal device is handed over, the first value is a minimum value.

With reference to the second aspect, in some implementations of the second aspect, the first information includes a second field, and the second field indicates whether the terminal device is to trigger sending of a random access request message 1 to the first cell.

With reference to the second aspect, in some implementations of the second aspect, when a value of the second field is a sixth value, the first field is a padding field.

According to a third aspect, a communication apparatus is provided, including: a transceiver unit, configured to receive first information from a first network device, where a first cell belongs to the first network device, the first cell is a serving cell currently accessed by the communication apparatus, the first information includes a first field, and the first field indicates a candidate cell, or the first field indicates the candidate cell and the serving cell currently accessed by the communication apparatus; a processing unit, configured to determine the first cell or a second cell based on the first information and a first rule, where the second cell is the candidate cell, the second cell belongs to the first network device, or the second cell belongs to a second network device, and the first rule indicates a correspondence between the first field and the candidate cell, or the first rule indicates the correspondence between the first field and the candidate cell and a correspondence between the first field and the serving cell currently accessed by the communication apparatus.

With reference to the third aspect, in some implementations of the third aspect, the processing unit is further configured to send a random access request message 1 to the first cell or the second cell based on the first information and the first rule.

With reference to the third aspect, in some implementations of the third aspect, the first cell is a cell configured with a random access resource configuration; the first rule includes: a first field of a first value corresponds to the first cell, and a first field of another value corresponds to a different candidate cell; and the first information includes a first field of a second value.

With reference to the third aspect, in some implementations of the third aspect, the processing unit is specifically configured to send the random access request message 1 to the first cell based on the first field of the first value and the first rule.

With reference to the third aspect, in some implementations of the third aspect, the processing unit is specifically configured to send the random access request message 1 to the different candidate cell based on the first field of the another value and the first rule.

With reference to the third aspect, in some implementations of the third aspect, after the communication apparatus is handed over from the first cell to the second cell, the first cell is the candidate cell, the second cell is a serving cell to which the communication apparatus is handed over, and the first rule includes: A first field of a third value corresponds to the first cell, and a first field of a fourth value corresponds to the second cell, where the first rule is determined based on an order of candidate cells configured with a random access resource configuration.

With reference to the third aspect, in some implementations of the third aspect, the first field of the second value corresponds to the second cell, and the fourth value is a minimum value.

With reference to the third aspect, in some implementations of the third aspect, after the communication apparatus is handed over from the first cell to the second cell, the first cell is the candidate cell, the second cell is a serving cell to which the communication apparatus is handed over, and the first rule is updated as follows: The first field of the first value corresponds to the second cell, and a first field of a fifth value corresponds to the first cell.

With reference to the third aspect, in some implementations of the third aspect, an updated first rule is related to one of the following: the order of the candidate cells configured with the random access resource configuration, a first order, a correspondence of the first field of the second value, and an order of identifiers of the candidate cells.

With reference to the third aspect, in some implementations of the third aspect, the order of the candidate cells configured with the random access resource configuration is determined based on an ascending order of logical identifiers of the candidate cells configured with the random access resource.

With reference to the third aspect, in some implementations of the third aspect, when the first field of the first value corresponds to the serving cell currently accessed by the communication apparatus or corresponds to the serving cell to which the communication apparatus is handed over, the first value is a minimum value.

With reference to the third aspect, in some implementations of the third aspect, the first information includes a second field, and the second field indicates whether the communication apparatus is to trigger sending of a random access request message 1 to the first cell.

With reference to the third aspect, in some implementations of the third aspect, when a value of the second field is a sixth value, the first field is a padding field, and the processing unit is specifically configured to determine, based on the second field in the first information, to send the random access request message 1 to the first cell.

With reference to the third aspect, in some implementations of the third aspect, when a value of the second field is a seventh value, before the determining the second cell based on the first information and the first rule, the processing unit is further configured to determine, based on the second field in the first information, not to send the random access request message 1 to the first cell.

According to a fourth aspect, a communication apparatus is provided, including: a transceiver unit, configured to send first information to a terminal device, where the first information indicates the terminal device to determine a first cell or a second cell according to a first rule, the first cell belongs to the communication apparatus, the first cell is a serving cell currently accessed by the terminal device, the first information includes a first field, and the first field indicates a candidate cell, or the first field indicates the candidate cell and the serving cell currently accessed by the terminal device; and the second cell is the candidate cell, the second cell belongs to the communication apparatus, or the second cell belongs to a second network device, and the first rule indicates a correspondence between the first field and the candidate cell, or the first rule indicates the correspondence between the first field and the candidate cell and a correspondence between the first field and the serving cell currently accessed by the terminal device.

With reference to the fourth aspect, in some implementations of the fourth aspect, the first cell is a cell configured with a random access resource configuration; the first rule includes: a first field of a first value corresponds to the first cell, and a first field of another value corresponds to a different candidate cell; and the first information includes a first field of a second value.

With reference to the fourth aspect, in some implementations of the fourth aspect, after the terminal device is handed over from the first cell to the second cell, the first cell is the candidate cell, the second cell is a serving cell to which the terminal device is handed over, and the first rule includes: A first field of a third value corresponds to the first cell, and a first field of a fourth value corresponds to the second cell, where the first rule is determined based on an order of candidate cells configured with a random access resource configuration.

With reference to the fourth aspect, in some implementations of the fourth aspect, the first field of the second value corresponds to the second cell, and the fourth value is a minimum value.

With reference to the fourth aspect, in some implementations of the fourth aspect, after the terminal device is handed over from the first cell to the second cell, the first cell is the candidate cell, the second cell is a serving cell to which the terminal device is handed over, and the first rule is updated as follows: The first field of the first value corresponds to the second cell, and a first field of a fifth value corresponds to the first cell.

With reference to the fourth aspect, in some implementations of the fourth aspect, an updated first rule is related to one of the following: the order of the candidate cells configured with the random access resource configuration, a first order, a correspondence of the first field of the second value, and an order of identifiers of the candidate cells.

With reference to the fourth aspect, in some implementations of the fourth aspect, the order of the candidate cells configured with the random access resource configuration is determined based on an ascending order of logical identifiers of the candidate cells configured with the random access resource.

With reference to the fourth aspect, in some implementations of the fourth aspect, when the first field of the first value corresponds to the serving cell currently accessed by the terminal device or corresponds to the serving cell to which the terminal device is handed over, the first value is a minimum value.

With reference to the fourth aspect, in some implementations of the fourth aspect, the first information includes a second field, and the second field indicates whether the terminal device is to trigger sending of a random access request message 1 to the first cell.

With reference to the fourth aspect, in some implementations of the fourth aspect, when a value of the second field is a sixth value, the first field is a padding field.

According to a fifth aspect, a communication apparatus is provided, including a processor coupled to a memory. The memory is configured to store a computer program, and the processor is configured to run the computer program, to cause the communication apparatus to perform the method according to any one of the first aspect and the possible implementations of the first aspect.

According to a sixth aspect, a communication apparatus is provided, including a processor coupled to a memory. The memory is configured to store a computer program, and the processor is configured to run the computer program, to cause the communication apparatus to perform the method according to any one of the second aspect and the possible implementations of the second aspect.

According to a seventh aspect, a computer-readable storage medium is provided, where the computer-readable storage medium stores a computer program. When the computer program is executed by a computer, the computer is caused to perform the communication method according to any one of the first aspect and the implementations of the first aspect, or the second aspect and the implementations of the second aspect that can be implemented.

According to an eighth aspect, a computer program product including instructions is provided. When the computer program product runs on a computer, the computer is caused to perform the communication method according to any one of the first aspect and the implementations of the first aspect, or the second aspect and the implementations of the second aspect that can be implemented.

According to a ninth aspect, a chip is provided. The chip includes a processor and a data interface. The processor reads, through the data interface, instructions stored in a memory, to perform the communication method according to any one of the first aspect and the implementations of the first aspect, or the second aspect and the implementations of the second aspect that can be implemented.

With reference to the ninth aspect, in a possible implementation, the processor is coupled to the memory through an interface.

With reference to the ninth aspect, in a possible implementation, the chip system further includes the memory. The memory stores a computer program or computer instructions.

## BRIEF DESCRIPTION OF DRAWINGS

FIG. 1 is a diagram of a scenario according to an embodiment of this application;
FIG. 2 is a schematic flowchart of a communication method according to an embodiment of this application;
FIG. 3 is a diagram of correspondences according to an embodiment of this application;
FIG. 4 is a diagram of correspondences according to an embodiment of this application;
FIG. 5 is a diagram of correspondences according to an embodiment of this application;
FIG. 6 is a diagram of a field structure of first information according to an embodiment of this application;
FIG. 7 is a block diagram of a communication apparatus according to this application;
FIG. 8 is a block diagram of a terminal device according to this application;
FIG. 9 is a block diagram of another communication apparatus according to this application; and
FIG. 10 is a block diagram of a network device according to this application.

## DESCRIPTION OF EMBODIMENTS

The following describes technical solutions of this application with reference to accompanying drawings.
The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The terminal device (user equipment, UE) in embodiments of this application may include various handheld devices, vehicle-mounted devices, wearable devices, or compute devices that have a wireless communication function, or other processing devices connected to a wireless modem. The terminal device may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like. This is not limited in embodiments of this application.

A network device in embodiments of this application may also be referred to as an access network device. The network device may be a base station (base transceiver station, BTS) in a global system for mobile communications (global system for mobile communications, GSM) or code division multiple access (code division multiple access, CDMA) system, may be a NodeB (NodeB, NB) in a wideband code division multiple access (wideband code division multiple access, WCDMA) system, may be an evolved NodeB (evolved NodeB, eNB, or eNodeB) in an LTE system, or may be a radio controller in a cloud radio access network (cloud radio access network, CRAN) scenario. Alternatively, the network device may be a relay station, an access point, a vehicle-mounted device, a wearable device, or a network device in a future 5G network or a network device in a future evolved public land mobile network (public land mobile network, PLMN) network, for example, a transmission reception point ((transmission reception point, TRP) or TP) in an NR system, a base station (gNB) in an NR system, or one or a group of antenna panels (including a plurality of antenna panels) of a base station in a 5G system. This is not particularly limited in embodiments of this application.

A specific structure of an execution entity of a method provided in embodiments of this application is not particularly limited in embodiments of this application, provided that a program that records code of the method provided in embodiments of this application is executable to perform communication according to the method provided in embodiments of this application. For example, the execution entity of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

A specific structure of an execution entity of a method provided in embodiments of this application is not particularly limited in embodiments of this application, provided that a program that records code of the method provided in embodiments of this application is executable to perform communication according to the method provided in embodiments of this application. For example, the execution entity of the method provided in embodiments of this application may be the terminal device or the network device, or a functional module that can invoke and execute the program in the terminal device or the network device.

The following describes technical terms in embodiments of this application.

Beam (beam): The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent through different beams. Optionally, a plurality of beams having a same or similar communication feature may be considered as one beam. One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna. It may be understood that one or more antenna ports forming one beam may also be considered as one antenna port set.

When a low-frequency band or an intermediate-frequency band is used, a signal may be sent omnidirectionally or sent at a wide angle. When a high-frequency band is used, because of a small carrier wavelength of a high-frequency communication system, an antenna array formed by a plurality of antenna elements may be disposed at a transmit end and a receive end. The transmit end sends a signal by using a specific beamforming weight, so that the sent signal forms a spatially directional beam, and the receive end receives the signal through the antenna array by using a specific beamforming weight, so that received power of the signal at the receive end can be increased, and a path loss can be avoided.

Reference signal (Reference Signal): Based on a long term evolution LTE/NR protocol, at a physical layer, uplink communication includes transmission of an uplink physical channel and an uplink signal. The uplink physical channel includes a random access channel (random access channel, PRACH), an uplink control channel (physical uplink control channel, PUCCH), an uplink data channel (physical uplink shared channel, PUSCH), and the like. The uplink signal includes a channel sounding signal (sounding reference signal, SRS), an uplink control channel de-modulation reference signal (PUCCH de-modulation reference signal, PUCCH-DMRS), an uplink data channel de-modulation reference signal PUSCH-DMRS, an uplink phase noise tracking signal (phase noise tracking reference signal, PTRS), an uplink positioning signal (uplink positioning RS), and the like. Downlink communication includes transmission of a downlink physical channel and a downlink signal. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS for short)/secondary synchronization signal (secondary synchronization signal, SSS), a downlink control channel demodulation reference signal PDCCH-DMRS, a downlink data channel demodulation reference signal PDSCH-DMRS, a phase noise tracking signal PTRS, a channel status information reference signal (channel status information reference signal, CSI-RS), a cell signal (cell reference signal, CRS) (not available in NR), a fine synchronization signal (time/-frequency tracking reference signal, TRS) (not available in LTE), an LTE/NR positioning signal (positioning RS), and the like.

Timing advance (TA, timing alignment): The timing advance is used for uplink transmission of a UE and means that the UE sends a data packet in advance by a corresponding amount of time according to a corresponding instruction. Timing advance command (timing advance command, TAC): The TAC is sent by a base station to the UE to notify the UE of a timing advance value. An important feature of uplink transmission is that different UEs perform orthogonal multiple access in time and frequency, in other words, uplink transmission from different UEs in a same cell does not interfere with each other. To ensure orthogonality of uplink transmission and avoid intra-cell interference, the TRP requires that time at which signals of different UEs in a same subframe but on different frequency domain resources arrive at the TRP is generally aligned. The TRP can correctly decode uplink data sent by the UE, provided that the TRP receives the uplink data within a cyclic prefix (cyclic prefix, CP) range. Therefore, uplink synchronization requires that time at which signals of different UEs from a same subframe arrive at the TRP falls within the CP. From a perspective of a UE side, the TA is essentially a negative offset (negative offset) between start time at which a downlink subframe is received and time at which an uplink subframe is transmitted. The TRP may control, by properly controlling an offset of each UE, time at which uplink signals from different UEs arrive at the TRP. A UE relatively far from the TRP has a relatively large transmission delay. Therefore, the UE needs to send uplink data in advance in comparison with a UE near the TRP.

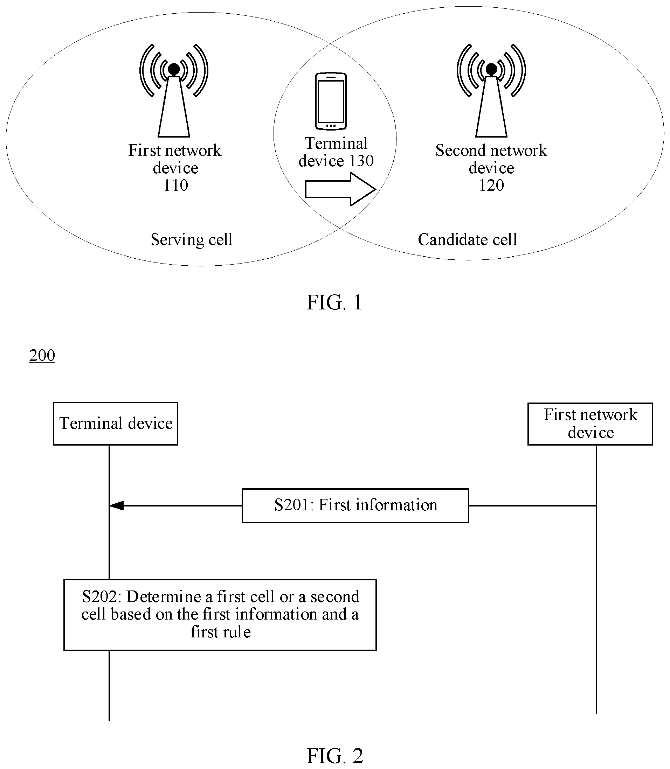

FIG. 1 is a block diagram of a wireless communication system 100 of an embodiment of this application. The wireless communication system 100 includes at least two cells, for example, a serving cell that belongs to a first network device 110 and a candidate cell that belongs to a second network device 120. When a terminal device 130 moves from the serving cell to the candidate cell, handover may occur, to be specific, the terminal device 130 is handed over from the serving cell to the candidate cell.

It should be noted that, when the terminal device is handed over to the candidate cell, the candidate cell may be understood as a new serving cell, and the original serving cell may be understood as a new candidate cell.

It should be understood that the candidate cell may be a neighboring cell of the serving cell. It should be understood that "first", "second", "third", "fourth", and the like in embodiments of this application are merely used for differentiation, and "first", "second", "third", and "fourth" are not intended to limit embodiments of this application.

It should be understood that, in embodiments of this application, one network device may have one or more cells. The serving cell and the candidate cell may alternatively belong to a same network device, in other words, the first network device and the second network device may be a same network device. In this case, the terminal device performs handover within the network device.

Optionally, the serving cell and the candidate cell may alternatively belong to different network devices, in other words, the first network device and the second network device may be different network devices. In this case, the terminal device performs handover between the network devices.

It should be noted that, in a communication method provided in embodiments of this application, a single network device and a terminal device may be used as an example, and the network device may transmit data or control signaling to the terminal device.

Specifically, based on configuration information of the network device, the terminal device may report a measurement result of a reference signal, to switch a serving beam of the terminal. Each cell (including the serving cell and the candidate cell) may be configured with a plurality of carriers.

As shown in FIG. 1, the current terminal device 130 is controlled by the first network device in the serving cell, and the first network device controls, by sending a handover message, the terminal device to be handed over to the candidate cell. Currently, the first network device triggers, through a downlink control channel (physical downlink control channel, PDCCH), a random access channel (random access channel, RACH) initiated by the terminal device to the candidate cell. In this manner, downlink control indication (downlink control indication, DCI) signaling needs to be used. This function is usually applicable to an uplink asynchronous scenario, in which the terminal device can normally receive downlink data, but uplink sending timing is invalid or lost. The network device needs the terminal device to obtain a timing advance (timing alignment, TA) again through the random access procedure, to transmit uplink data.

It should be noted that, when DCI signaling is currently used to trigger the terminal device to initiate the RACH to the candidate cell, the network device needs to include, in the PDCCH, DCI signaling in a format 0_1.

Optionally, the DCI signaling may include the following fields: preamble index (random access preamble index), common uplink carrier or supplement uplink carrier (uplink indicator/supplement uplink indicator), synchronization/broadcasting signal index (synchronization signal index/physical broadcasting channel index), mask index (physical random access channel mask index), and reserved bit position. A part of bits in the reserved bit position may indicate a candidate cell for random access.

Based on this, the terminal device may continue to be handed over to another candidate cell when the terminal device does not receive a radio resource control (radio resource control, RRC) reconfiguration command after being handed over to a new cell. The another candidate cell may also be the original serving cell. This is equivalent to that after being handed over to the new cell, when there is no reconfiguration, the terminal device may be handed over back to the original serving cell based on a handover command delivered by the new cell.

However, if 2 or 3 bits reserved in the DCI signaling are used to indicate the candidate cell, a correspondence between a field indicating the candidate cell and the candidate cell needs to be specified. Otherwise, the terminal device cannot determine a cell whose random access resource is to be used to send a random access request message 1. As a result, a handover process of the terminal device is affected.

In view of the foregoing problem, in a communication method and a communication apparatus provided in embodiments of this application, a correspondence between a field indicating a candidate cell and a candidate cell is specified, and a manner in which DCI indicates the terminal device to initiate random access to the candidate cell is specified. This improves handover efficiency of the terminal device.

For ease of understanding and description, by way of example but not limitation, the following describes an execution process and actions of the communication method in the communication system in this application.

FIG. 2 is a schematic flowchart of a communication method according to an embodiment of this application. The method shown in FIG. 2 may be applied to the communication system shown in FIG. 1. The method 200 shown in FIG. 2 includes the following steps.

S201: A terminal device receives first information, and correspondingly, a first network device sends the first information.

It should be noted that a first cell belongs to the first network device, and the first cell is a serving cell currently accessed by the terminal device. With handover of the terminal device, the serving cell currently accessed by the terminal device may change.

For example, the first information may be a DCI delivered by the first network device to the terminal device through a PDCCH, and the DCI includes a field indicating a candidate cell. For example, the field may be a "cell indicator" field.

In an implementation, the first information includes a first field, and the first field indicates a candidate cell, or the first field indicates the candidate cell and the serving cell currently accessed by the terminal device.

For example, the first field is a "cell indicator" field. When the serving cell currently accessed by the terminal device is the first cell, and the candidate cell is a second cell, the first field may indicate the second cell, or may indicate the first cell and the second cell.

It should be understood that a quantity of bits of the first field is not limited in this embodiment of this application, and may be 2 bits or 3 bits. For example, the quantity N of bits of the first field is $\lceil \log_2 C + 1 \rceil$. C represents a quantity of candidate cells configured with a RACH resource, "+1" represents that a serving cell is included, and N is obtained by rounding up a logarithm of (C+1) to a base of 2.

S202: The terminal device determines the first cell or the second cell based on the first information and a first rule.

It should be noted that the second cell is the candidate cell, and the second cell belongs to the first network device, or the second cell belongs to a second network device. The second cell and the first cell may be neighboring cells of each other. When the terminal device is handed over from the first cell to the second cell, the second cell may be understood as a serving cell to which the terminal device is handed over.

It should be understood that, when the second cell belongs to the first network device, this corresponds to a scenario in which the terminal device is handed over between cells within the first network device; and when the second cell belongs to the second network device, this corresponds to a scenario in which the terminal device is handed over between cells in a plurality of network devices.

It should be understood that the first rule indicates a correspondence between the first field and the candidate cell, or the first rule indicates the correspondence between the first field and the candidate cell and a correspondence between the first field and the serving cell currently accessed by the terminal device. The first rule may be replaced with "a correspondence", "an association relationship", or the like.

It should be understood that the first rule may further indicate a correspondence between a value of the first field and an identifier of the candidate cell. The first rule may further indicate a correspondence between the value of the first field and a physical identity of the candidate cell. The first rule may further indicate a correspondence between the value of the first field and a logical identifier of the candidate cell.

It should be understood that the network device may configure at least one cell or cell group for the terminal device as the candidate cell to which the terminal device is to be handed over. In addition, the network device configures an identifier for the cell or cell group. The identifier may be understood as a logical identifier, and may be different from an identifier or a physical cell identity (physical cell identity, PCI) of the cell. The serving cell accessed by the terminal device may also be used as a candidate cell, and is associated with an identifier of the candidate cell. Generally, configuring the serving cell as a candidate cell is applicable to a scenario in which the terminal device is continuously handed over between cells. To be specific, after the terminal device is handed over from the currently accessed serving cell to another candidate cell, when there is no reconfiguration, the terminal device may be handed over back to the original serving cell.

For example, when the first field indicates the candidate cell, the first rule indicates the correspondence between the first field and the candidate cell; or when the first field indicates the candidate cell and the serving cell currently accessed by the terminal device, the first rule indicates the correspondence between the first field and the candidate cell and the correspondence between the first field and the serving cell currently accessed by the terminal device.

It should be understood that, when the first rule indicates the correspondence between the first field and the candidate cell, the terminal device may determine the second cell based on the first information and the first rule; or when the first rule indicates the correspondence between the first field and the candidate cell and the correspondence between the first field and the serving cell currently accessed by the terminal device, the terminal device may determine the first cell and/or the second cell based on the first information and the first rule.

Further, the terminal device may send a random access request message 1 to the first cell or the second cell based on the first information and the first rule.

Specifically, the terminal device may send the random access request message 1 to the first cell or the second cell based on the value of the first field and the first rule. Alternatively, the terminal device may send the random access request message 1 to the first cell or the second cell based on the value of the first field and the association relationship. Alternatively, the terminal device may send the random access request message 1 to the first cell or the second cell based on the value of the first field and the correspondence.

In other words, a cell to which the terminal device sends the random access request message 1 is related to the value of the first field and a correspondence between the value of the first field and a cell identifier.

In an implementation, the first cell is a cell configured with a random access resource, and the first rule includes: A first field of a first value corresponds to the first cell, and a first field of another value corresponds to a different candidate cell. The first information includes a first field of a second value.

Specifically, the terminal device may send the random access request message 1 to the first cell based on the first field of the first value and the first rule. The terminal device may send the random access request message 1 to the second cell based on the first field of the second value and the first rule.

For example, a random access resource configuration of the candidate cell may be a layer 1/layer 2 triggered mobility (L1/L2 triggered mobility, LTM) candidate cell resource configuration. The first cell is a cell configured with the random access resource, and it may be understood that the first cell may also be used as a candidate cell of the terminal device. After the terminal device is handed over from the first cell to another cell, the terminal device may be further handed over back from the another cell to the first cell.

It should be understood that first fields of other values are in one-to-one correspondence with different candidate cells.

The terminal device may initiate random access to the different candidate cells based on the first fields of the other values and the first rule.

It should be noted that, based on the first field of the second value included in the first information, the terminal device may determine, based on the first field of the second value in the first information and the first rule, that the second cell is the candidate cell.

It may be understood that the first information may further include the first field of the another value. This is not limited in this application.

It should be noted that the first rule may indicate a correspondence between the first field and a cell. The cell may be the candidate cell, or may be the candidate cell and the serving cell currently accessed by the terminal device. With handover of the terminal device, the serving cell currently accessed by the terminal device may also change. A cell accessed by the terminal device before handover may be understood as the serving cell currently accessed by the terminal device, and a cell accessed by the terminal device after handover may be understood as a serving cell to which the terminal device is handed over. After the terminal device is handed over, the serving cell to which the terminal device is handed over may also be understood as the serving cell currently accessed by the terminal device, where "current" after handover may refer to a different moment from "current" before handover.

It should be understood that the correspondence between the first field and the cell may be fixed, or may flexibly change as the terminal device is handed over between different cells. In other words, the first rule may be fixed, or may be dynamically updated.

Based on this, the following separately describes several possible cases of the first rule.

Manner 1: The first rule is fixed.

It should be noted that the fixed first rule may be understood as that a correspondence between the value of the first field and the cell is fixed. The cell may be the candidate cell and the serving cell currently accessed by the terminal device.

It should be understood that the first rule is fixed only in a relative sense, and a correspondence between the first fields of all values and cells is not fixed. At least a correspondence between the first fields of values other than a minimum value and cells is fixed.

In this embodiment of this application, the terminal device receives the first information from the first network device in the first cell, where the first information includes the first field, and the first field indicates the candidate cell, or the first field indicates the candidate cell and the serving cell currently accessed by the terminal device; and the terminal device determines the first cell or the second cell based on the first information and the first rule, where the first cell is the serving cell currently accessed by the terminal device, the second cell is the candidate cell, and the first rule indicates the correspondence between the first field and the candidate cell, or the first rule indicates the correspondence between the first field and the candidate cell and the correspondence between the first field and the serving cell currently accessed by the terminal device. Specifically, the first field of the first value corresponds to the first cell (the serving cell currently accessed by the terminal device), and the first field of the second value corresponds to the second cell (one candidate cell of the terminal device). The terminal device determines the second cell based on the first field of the second value in the first information and the first rule, and sends the random access request message 1 to the second cell. After the terminal device is handed over from the first cell to the second cell, the first cell is the candidate cell, and the second cell is the serving cell to which the terminal device is handed over. After handover, the first rule includes: A first field of a third value corresponds to the first cell, and a first field of a fourth value corresponds to the second cell. The first rule is determined based on an order of candidate cells configured with a random access resource.

It should be understood that the candidate cell configured with the random access resource may be understood as that the random access resource configuration of the candidate cell is included in an LTM candidate cell random access resource configuration. The first cell accessed by the terminal device before handover is also configured with a random access resource, and the random access resource configuration of the first cell is also included in the LTM candidate cell random access resource configuration.

It should be noted that the order of the candidate cells configured with the random access resource is determined based on an ascending order of logical identifiers of the candidate cells configured with the random access resource.

It can be learned that, before and after the terminal device is handed over, the order of the candidate cells configured with the random access resource is fixed. Therefore, a correspondence between different values and candidate cells in the first rule is fixed. For example, a first field of a value 00 corresponds to a cell 1 before and after handover, and a first field of a value 01 corresponds to a cell 2 before and after handover.

It should be noted that, before being handed over to the second cell, the terminal device is connected to the first network device in the first cell. That the first cell is a cell configured with the random access resource configuration may be understood as that the random access resource configuration of the first cell is also the random access resource configuration of the candidate cell. For example, a RACH resource of the first cell is included in an LTM configuration. In this case, mapping of a value of a DCI field is mapping of the correspondence between the first field and the candidate cell, and the mapping may be performed based on an order in a list of candidate cells whose LTM configurations include the RACH resource (an ascending order of logical identifiers of the candidate cells configured with the random access resource). The correspondence between the first field and the candidate cell may also be understood as a correspondence between the value of the first field and the candidate cell.

For example, when the correspondence between the value of the first field and the candidate cell is mapped based on the order in the list of candidate cells whose LTM configurations include the RACH resource, during handover of the terminal device between the cells, values of the first field are in one-to-one correspondence with the candidate cells, and such correspondence does not change with handover of the terminal device, unless the list of the candidate cells for LTM is reconfigured through RRC. That the values of the first field are in one-to-one correspondence with the candidate cells may be understood as that the values of the first field are in one-to-one correspondence with physical identities of the candidate cells (physical cell identity, PCI).

For example, in RRC configuration signaling, the LTM configuration includes the following correspondence:

LTM-candidate cell ID=0, corresponding to Physical cell ID=538 (with RACH configured);
LTM-candidate cell ID=1, corresponding to Physical cell ID=1002 (with RACH configured);
LTM-candidate cell ID=2, corresponding to Physical cell ID=123 (current serving cell, with RACH configured);
LTM-candidate cell ID=3, corresponding to Physical cell ID=356;
LTM-candidate cell ID=4, corresponding to Physical cell ID=432;
LTM-candidate cell ID=5, corresponding to Physical cell ID=974;
LTM-candidate cell ID=6, corresponding to Physical cell ID=736 (with RACH configured); and
LTM-candidate cell ID=7, corresponding to Physical cell ID=176.

Based on the order in the list of candidate cells whose LTM configurations include the RACH resource (the ascending order of the logical identifiers of the candidate cells configured with the random access resource), the following may be obtained by mapping the order to first fields of different values:

LTM-candidate cell ID=0, corresponding to Physical cell ID=538, and corresponding to '00';
LTM-candidate cell ID=1, corresponding to Physical cell ID=1002, and corresponding to '01';
LTM-candidate cell ID=2, corresponding to Physical cell ID=123, and corresponding to '10'; and
LTM-candidate cell ID=6, corresponding to Physical cell ID=736, and corresponding to '11'.

The candidate cell 538 corresponds to a first field of a value '00'; the candidate cell 1002 corresponds to a first field of a value '01'; the candidate cell 123 corresponds to a first field of a value '10'; and the candidate cell 736 corresponds to a first field of a value '11'.

It can be learned that the physical identities of the candidate cells may correspond to first fields of different values. When receiving the first information including the first field, the terminal device may determine the candidate cell to which the terminal device is to be handed over.

It should be noted that the candidate cell in the LTM configuration may alternatively not include the RACH resource, for example, the candidate cell 356, the candidate cell 432, the candidate cell 974, and the candidate cell 176. The candidate cell that does not include the RACH resource may also occupy a first field of a corresponding value, but the first field of the corresponding value corresponding to the candidate cell that does not include the RACH resource may be ignored by the terminal device, or may not indicate the candidate cell to which the terminal device is to be handed over.

For example, it is assumed that the first cell is the candidate cell 123, and the second cell is the candidate cell 538. Before the terminal device is handed over, the terminal device accesses the first cell, where the first value is '10', and the second value is '00'. After the terminal device is handed over, the terminal device accesses the second cell, where the third value is '10', and the fourth value is '00'. The first field of the first value and the first field of the third value correspond to the first cell, and the first field of the second value and the first field of the fourth value correspond to the second cell, where the first value is the same as the third value, and the second value is the same as the fourth value. It can be learned that, according to the foregoing first rule, one-to-one correspondence between the values of the first field and the cells is fixed before and after the terminal device is handed over.

For example, when the correspondence between the value of the first field and the candidate cell is mapped based on the order in the list of candidate cells whose LTM configurations include the RACH resource, during handover of the terminal device between the cells, the values of the first field correspond to the candidate cells and the current serving cell based on an order of configurations of the candidate cells or identifiers of the candidate cells. In addition, in this correspondence, except for the serving cell, a correspondence of a non-serving cell does not change with handover of the terminal device, unless the list of the candidate cells for LTM is reconfigured through RRC.

For example, in RRC configuration signaling, the LTM configuration includes the following correspondence:

LTM-candidate cell ID=0, corresponding to Physical cell ID=538 (with RACH configured);
LTM-candidate cell ID=1, corresponding to Physical cell ID=1002;
LTM-candidate cell ID=2, corresponding to Physical cell ID=123 (current serving cell, with RACH configured);
LTM-candidate cell ID=3, corresponding to Physical cell ID=356;
LTM-candidate cell ID=4, corresponding to Physical cell ID=432;

LTM-candidate cell ID=5, corresponding to Physical cell ID=974; and
LTM-candidate cell ID=6, corresponding to Physical cell ID=176 (with RACH configured).

Based on the order in the list of candidate cells whose LTM configurations include the RACH resource (the ascending order of the logical identifiers of the candidate cells configured with the random access resource), the following may be obtained by mapping the order to first fields of different values:

LTM-candidate cell ID=2, corresponding to Physical cell ID=123, which is the current serving cell, and corresponding to '00';
LTM-candidate cell ID=0, corresponding to Physical cell ID=538, and corresponding to '01';
LTM-candidate cell ID=2, corresponding to Physical cell ID=123, which is both the current serving cell and a 2nd cell configured with a random access resource in the list of the candidate cells, and therefore corresponding to "10"; and
LTM-candidate cell ID=6, corresponding to Physical cell ID=176, and corresponding to '11'.

In this example, the serving cell is indicated by using the minimum value of the first field, and remaining values of the first field are in one-to-one correspondence with the candidate cells configured with the random access resource. An order in the correspondence is that configuration identifiers of the candidate cells in ascending order sequentially correspond to the remaining values in ascending order other than the minimum value of the first field.

It should be understood that, in this application, the order in the correspondence may alternatively be a descending order, or the order in the correspondence may be understood based on physical cell identities. Alternatively, regardless of whether a candidate cell is configured with a random access resource, the candidate cell corresponds to a value of the first field.

The method in this example further includes: If the terminal device is triggered, by using the first field of the minimum value in the first information, to send the random access request message 1 to the serving cell, the terminal device attempts to receive a random access request response (random access response, RAR) message on a preconfigured time-frequency resource; or if the terminal device is triggered, by using a first field of another value other than the minimum value in the first information, to send the random access request message 1 to the serving cell, the terminal device may no longer attempt to receive or consider receiving a random access request response message for the random access request message 1. It should be understood that the another value other than the minimum value in the first information is a value corresponding to the serving cell.

For example, in this example, the first field of the minimum value '00' corresponds to the cell PCI 123 (the current serving cell), and the first field of the value '10' also corresponds to the cell PCI 123. If the first field of the value '00' is used to trigger the terminal device to send the random access request message 1 to the cell PCI 123, the terminal device may attempt to receive the random access request response message on the preconfigured time-frequency resource; or if the first field of the value '10' is used to trigger the terminal device to send the random access request message 1 to the cell PCI 123, the terminal device may no longer attempt to receive or consider receiving the random access request response message for the random access request message 1.

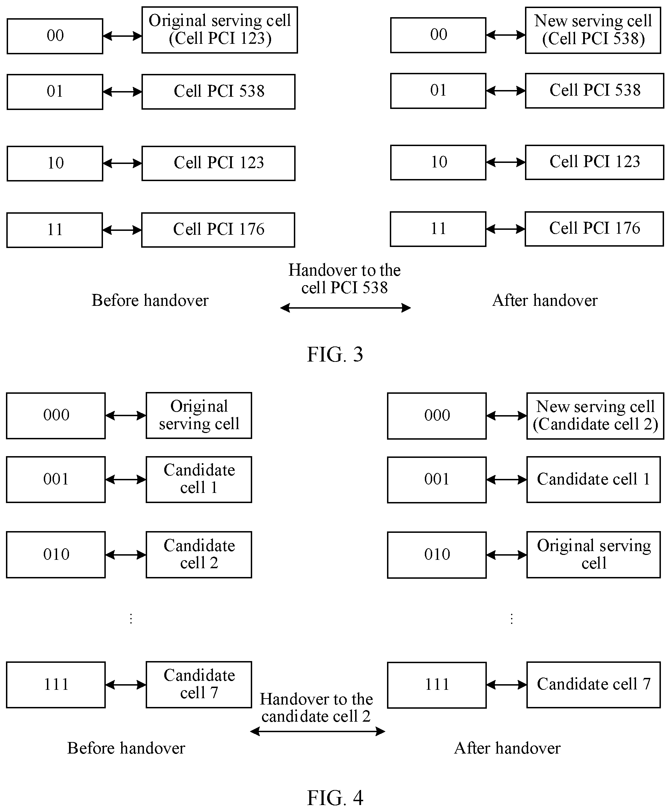

For ease of understanding, FIG. 3 shows correspondences between values of a first field and cells before and after the terminal device is handed over.

Before handover, a first field of a value '00' corresponds to an original serving cell (a cell PCI 123), a first field of a value '01' corresponds to a cell PCI 538, a first field of a value '10' corresponds to the cell PCI 123, and a first field of a value '11' corresponds to a cell PCI 176.

After handover to the cell PCI 538, the first field of the value '00' corresponds to a new serving cell (the cell PCI 538), the first field of the value '01' corresponds to the cell PCI 538, the first field of the value '10' corresponds to the cell PCI 123, and the first field of the value '11' corresponds to the cell PCI 176.

It can be learned that, before and after handover, the cell corresponding to '00' changes with a change of the serving cell of the terminal device, and cells corresponding to the first fields of the values '01', '10', and '11' remain fixed.

In this example, the serving cell of the terminal device may correspond to first fields of two values. For example, the serving cell of the terminal device is the cell PCI 123, and values of the corresponding first fields are '00' and '10'.

Similarly, the terminal device is continuously handed over between cells. Based on FIG. 3, after the terminal device is handed over to the cell PCI 538, the terminal device may be further handed over back to the cell PCI 123. After the terminal device is handed over back to the cell PCI 123, the first field of the value '00' corresponds to the cell PCI 123, the first field of the value '01' corresponds to the cell PCI 538, the first field of the value '10' corresponds to the cell PCI 123, and the first field of the value '11' corresponds to the cell PCI 176. Alternatively, after being handed over to the cell PCI 538, the terminal device may be further handed over to the cell PCI 176. After the terminal device is handed over to the cell PCI 176, the first field of the value '00' corresponds to the cell PCI 176, the first field of the value '01' corresponds to the cell PCI 538, the first field of the value '10' corresponds to the cell PCI 123, and the first field of the value '11' corresponds to the cell PCI 176.

Manner 2: The first rule may be dynamically updated.

It should be noted that the dynamically updated first rule may be understood as that a correspondence between the value of the first field and the cell may be dynamically updated. The cell may be the candidate cell and the serving cell currently accessed by the terminal device.

In this embodiment of this application, the terminal device receives the first information from the first network device in the first cell, where the first information includes the first field, and the first field indicates the candidate cell, or the first field indicates the candidate cell and the serving cell currently accessed by the terminal device; and the terminal device determines the first cell or the second cell based on the first information and the first rule, where the first cell is the serving cell currently accessed by the terminal device, the second cell is the candidate cell, and the first rule indicates the correspondence between the first field and the candidate cell, or the first rule indicates the correspondence between the first field and the candidate cell and the correspondence between the first field and the serving cell currently accessed by the terminal device. Specifically, the first field of the first value corresponds to the first cell (the serving cell currently accessed by the terminal device), and the first field of the second value corresponds to the second cell (one candidate cell of the terminal device). The terminal device determines the second cell based on the first field of the second value in the first information and the first rule, and sends the random access request message 1 to the second cell. After the terminal device is handed over from the first cell to the second cell, the first cell is the candidate cell, and the second cell is the serving cell to which the terminal device is handed over. After handover, the first rule is updated as follows: The first field of the first value corresponds to the second cell, and a first field of a fifth value corresponds to the first cell.

It can be learned that, in Manner 2, before the terminal device is handed over, the first field of the first value corresponds to the first cell; and after the terminal device is handed over, the first field of the first value corresponds to the second cell. The first field of the first value corresponds to the serving cell of the terminal device. Because the terminal device is handed over, the serving cell of the terminal device changes continuously, and a cell corresponding to the first field of the first value also changes continuously with handover of the terminal device.

It should be noted that, before being handed over to the second cell, the terminal device is connected to the first network device in the first cell. That the first cell is a cell configured with the random access resource configuration may be understood as that the random access resource configuration of the first cell is also the random access resource configuration of the candidate cell. For example, the random access resource configuration of the first cell is also included in an LTM candidate cell random access resource configuration.

In the first rule in Manner 2, when the first field of the first value corresponds to the serving cell of the terminal device (including the serving cell currently accessed by the terminal device and the serving cell to which the terminal device is handed over, for example, the first cell before handover and the second cell after handover that are described above), the first value is a minimum value. For example, the first value may be '0', '00', or '000'.

Alternatively, a first field of a fixed value corresponds to the serving cell of the terminal device. For example, the fixed value may be the minimum value ('0', '00', or '000') of the first field.

For example, when the terminal device accesses the first cell, the first cell is the serving cell currently accessed by the terminal device, and the first field of the first value corresponds to the first cell. When the terminal device accesses the second cell, the second cell is the serving cell to which the terminal device is handed over, and the first field of the first cell corresponds to the second cell.

It can be learned that, in Manner 2, a cell corresponding to the first field of the first value may dynamically change with a change of the serving cell of the terminal device. The value of the first field corresponds to a cell, and this correspondence changes with handover of the terminal device. That the value of the first field corresponds to the cell may be understood as that the value of the first field corresponds to a physical identity of the cell.

Based on the first rule in Manner 2, after the terminal device is handed over from the first cell to the second cell, the first field of the first value is updated from corresponding to the first cell to corresponding to the second cell. In addition, the first cell is updated to corresponding to the first field of the fifth value.

It should be understood that the fifth value may be the same as the second value, or may be different from the second value.

**Optionally, the fifth value is the same as the second value.**

It should be noted that, after the terminal device is handed over from the first cell to the second cell, the first cell corresponds to the value of the first field corresponding to the second cell before handover. In other words, the value of the first field is exchanged between corresponding to the original serving cell (the first cell) and corresponding to the new serving cell (the second cell).

For example, FIG. 4 shows correspondences between values of a first field and cells before and after the terminal device is handed over.

Before handover, a first field of a value '000' corresponds to an original serving cell, a first field of a value '001' corresponds to a candidate cell 1, a first field of a value '010' corresponds to a candidate cell 2, a first field of a value '011' corresponds to a candidate cell 3, a first field of a value '100' corresponds to a candidate cell 4, a first field of a value '101' corresponds to a candidate cell 5, a first field of a value '110' corresponds to a candidate cell 6, and a first field of a value '111' corresponds to a candidate cell 7.

After handover to the candidate cell 2, the first field of the value '000' corresponds to a new serving cell (the candidate cell 2), the first field of the value '001' corresponds to the candidate cell 1, the first field of the value '010' corresponds to the original serving cell, the first field of the value '011' corresponds to the candidate cell 3, the first field of the value '100' corresponds to the candidate cell 4, the first field of the value '101' corresponds to the candidate cell 5, the first field of the value '110' corresponds to the candidate cell 6, and the first field of the value '111' corresponds to the candidate cell 7.

It can be learned that before and after handover, the cell corresponding to the first field of the value '000' and the cell corresponding to the first field of the value '010' are exchanged. '000' is the first value, and '010' is the second value.

Based on this, an updated first rule may be determined based on a correspondence of the first field of the second value, in other words, the updated first rule is related to the correspondence of the first field of the second value. After handover, the cell (the second cell) corresponding to the first field of the second value becomes a serving cell newly accessed by the terminal device, and the cell corresponds to the first field of the first value; and a serving cell (the first cell) originally accessed by the terminal device becomes a candidate cell, and corresponds to the first field of the second value. In this case, the fifth value and the second value are the same, for example, both are '010'.

**Optionally, the fifth value is different from the second value.**

In a first case, after the terminal device is handed over from the first cell to the second cell, a value of the first field corresponding to the first cell may be a maximum value by default. In other words, after the terminal device is handed over, the first cell corresponds to the first field of the maximum value.

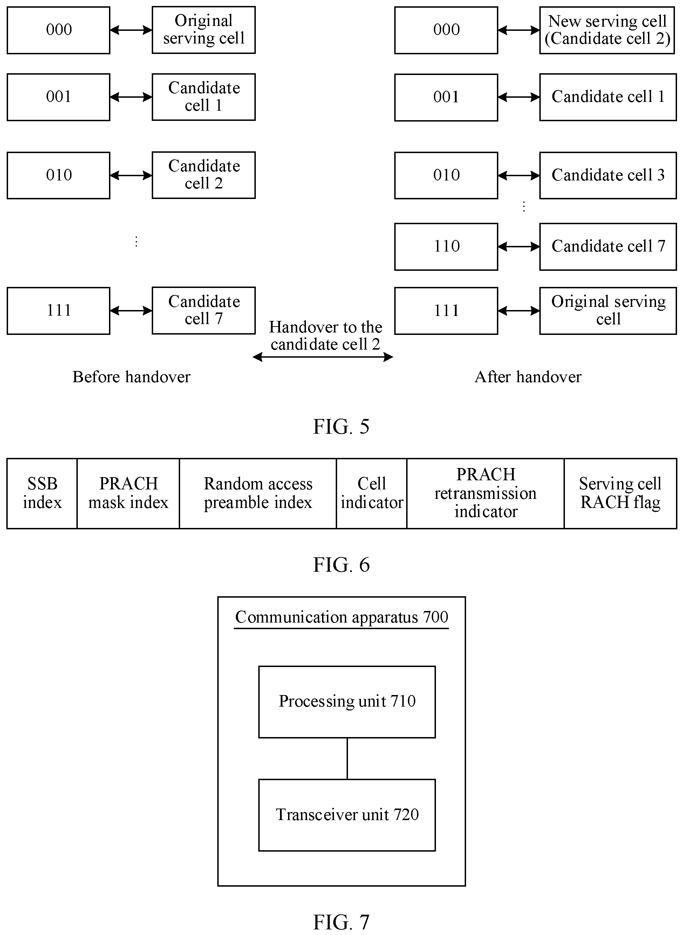

For example, FIG. 5 shows correspondences between values of a first field and cells before and after the terminal device is handed over.

Before handover, a first field of a value '000' corresponds to an original serving cell, a first field of a value '001' corresponds to a candidate cell 1, a first field of a value '010' corresponds to a candidate cell 2, a first field of a value '011' corresponds to a candidate cell 3, a first field of a value '100' corresponds to a candidate cell 4, a first field of a value '101' corresponds to a candidate cell 5, a first field of a value '110' corresponds to a candidate cell 6, and a first field of a value '111' corresponds to a candidate cell 7.

After handover to the candidate cell 2, the first field of the value '000' corresponds to a new serving cell (the candidate cell 2), the first field of the value '001' corresponds to the candidate cell 1, the first field of the value '010' corresponds to the candidate cell 3, the first field of the value '011' corresponds to the candidate cell 4, the first field of the value '100' corresponds to the candidate cell 5, the first field of the value '101' corresponds to the candidate cell 6, the first field of the value '110' corresponds to the candidate cell 7, and the first field of the value '111' corresponds to the original serving cell.

It can be learned that after the terminal device is handed over from the original serving cell to the candidate cell 2, the candidate cell 2 corresponds to the first field of the value '000', and the original serving cell corresponds to the first field of the value '111'. The value '111' is the maximum value of the first field. It may also be understood that FIG. 5 shows an order in the correspondence between the values of the first field and the cells. After the terminal device is handed over, the original serving cell may be ranked at a last position in the order by default.

Based on this, the updated first rule may be determined based on a first order. The first order may be understood as an order in a correspondence between the first field and logical identifiers of the cells in ascending order before handover, as shown in FIG. 5. After the terminal device is handed over, the original serving cell corresponds to a last position in the first order, and the value of the first field corresponding to another candidate cell may also change accordingly. For example, before handover, the candidate cell 7 corresponds to the first field of the value '111', and after handover, the candidate cell 7 corresponds to the first field of the value '110'. It can be learned that, in the first case, the fifth value is different from the second value. For example, the second value is '010', and the fifth value is '111'.

For example, the first order may be an initial default order, or may be an order predefined according to a specific rule.

In a second case, after the terminal device is handed over from the first cell to the second cell, the first rule is determined based on an order of candidate cells configured with the random access resource configuration.

It should be noted that a new candidate cell including the RACH resource may be the original serving cell. The order of the candidate cells configured with the random access resource configuration may be determined based on an ascending order of logical identifiers of the candidate cells configured with the random access resource.

For example, based on a list of candidate cells whose LTM configurations include the RACH resource (an ascending order of the logical identifiers of the candidate cells configured with the random access resource), the following may be obtained by mapping the order to first fields of different values:

LTM-candidate cell ID=0, corresponding to Physical cell ID=538, and corresponding to '00';
LTM-candidate cell ID=1, corresponding to Physical cell ID=1002, and corresponding to '01';

LTM-candidate cell ID=2, corresponding to Physical cell ID=123, and corresponding to '10'; and
LTM-candidate cell ID=6, corresponding to Physical cell ID=736, and corresponding to '11'.

The original serving cell 538 of the terminal device corresponds to the first field of the value '00', and the terminal device may be handed over from the original serving cell 538 to the new serving cell 123. Before handover, the new serving cell 123 corresponds to the first field of the value '10'.

After the terminal device is handed over from the original serving cell 538 to the new serving cell 123, the correspondence between the values of the first field and the cells may be updated as follows:

LTM-candidate cell ID=2, corresponding to Physical cell ID=123, and corresponding to '00';
LTM-candidate cell ID=0, corresponding to Physical cell ID=538, and corresponding to '01';
LTM-candidate cell ID=1, corresponding to Physical cell ID=1002, and corresponding to '10'; and
LTM-candidate cell ID=6, corresponding to Physical cell ID=736, and corresponding to '11'.

It can be seen that the new serving cell corresponds to the first field of the minimum value '00', and the original serving cell 538 may be included in the LTM configuration as a new candidate cell including the RACH resource. In addition to the new serving cell 123, an order of other candidate cells whose LTM configurations include the RACH resource is: the candidate cell 538 corresponding to LTM-candidate cell ID=0, the candidate cell 1002 corresponding to LTM-candidate cell ID=1, and the candidate cell 736 corresponding to LTM-candidate cell ID=6. In the second case, the first rule is updated based on the order of the candidate cells configured with the random access resource configuration. Based on this, the order of the candidate cells configured with the random access resource configuration is, in sequence, the candidate cell 538, the candidate cell 1002, and the candidate cell 736, and values of the corresponding first fields are sequentially '01', '10', and '11' in ascending order.

Therefore, in the second case, the fifth value is different from the second value. For example, the second value is '10', and the fifth value is '01'.

In a third case, after the terminal device is handed over from the first cell to the second cell, the first rule is determined based on an order of identifiers of candidate cells. The identifier of the candidate cell may be understood as a physical identity of the candidate cell.

For example, before the terminal device is handed over, the correspondence between the first fields of different values and cells is as follows:

a cell with Physical cell ID=123 corresponds to '00';
a cell with Physical cell ID=538 corresponds to '01';
a cell with Physical cell ID=736 corresponds to '10'; and
a cell with Physical cell ID=1002 corresponds to '11'.

The original serving cell 123 of the terminal device corresponds to the first field of the value '00', and the terminal device may be handed over from the original serving cell 123 to the new serving cell 1002. Before handover, the new serving cell 1002 corresponds to the first field of the value '11'.

After the terminal device is handed over from the original serving cell 123 to the new serving cell 1002, the correspondence between the values of the first field and the cells may be updated as follows:

a cell with Physical cell ID=1002 corresponds to '00';
a cell with Physical cell ID=123 corresponds to '01';
a cell with Physical cell ID=538 corresponds to '10'; and
a cell with Physical cell ID=736 corresponds to '11'.

It can be seen that the new serving cell 1002 corresponds to the first field of the minimum value '00', and the original serving cell 123 corresponds to the first field of the value '01' based on the order of the physical identities of the candidate cells (for example, the candidate cells are sorted in ascending order of physical cell identities as the cell 123, the cell 538, and the cell 736).

Therefore, in the third case, the fifth value is different from the second value. For example, the second value is '11', and the fifth value is '01'.

In conclusion, it can be learned that, when the terminal device is handed over between different cells, the first rule may be dynamically updated based on the order of the candidate cells configured with the random access resource configuration, the first order, the correspondence of the first field of the second value, the order of the identifiers of the candidate cells, and the like. A random access resource configuration of an original serving cell accessed by the terminal device is also the random access resource configuration of the candidate cell, so that the terminal device can be flexibly handed over between different candidate cells.

In addition, in another implementation, the first information may further include a second field. The second field indicates whether the terminal device is to trigger sending of the random access request message 1 (a preamble) to the first cell. The second field may be 1 bit newly added to the first information. The bit may be used to control whether the terminal device triggers access to the current serving cell.

In this embodiment of this application, the terminal device receives the first information from the first network device in the first cell, where the first information includes the first field, the first field indicates the candidate cell, the first information further includes the second field, and the second field indicates whether the terminal device is to trigger sending of the random access request message 1 to the first cell; and the terminal device determines the first cell or the second cell based on the first information and the first rule, where the first cell is the serving cell currently accessed by the terminal device, the second cell is the candidate cell, and the first rule indicates the correspondence between the first field and the candidate cell.

For example, FIG. 6 is a diagram of a field structure of the first information, including synchronization signal block index (synchronization signal block index, SSB index), mask index (physical random access channel mask index, PRACH Mask index), preamble index (random access preamble index), cell indicator (cell indicator), random access request retransmission indicator (PRACH retransmission indicator), and serving cell random access flag (serving cell RACH flag). The first field is cell indicator shown in FIG. 6, the second field is serving cell RACH flag shown in FIG. 6, and random access request retransmission indicator indicates the terminal device to trigger sending of the random access request message 1 this time, including initial transmission or retransmission.

Optionally, the second field may be enabled or disabled in a DCI format configured through RRC.

When a value of the second field is a sixth value, the first field is a padding field, and the terminal device may determine, based on the second field in the first information, to send the random access request message 1 to the first cell.

For example, when the sixth value is 1, the second field indicates that the terminal device can trigger random access to the currently accessed serving cell (the first cell). In this case, the value of the first field may be considered meaningless, and the terminal device may ignore the first field, or consider the first field as a padding bit. A PDCCH for transmission of the first information only indicates a RACH of the currently accessed serving cell (the first cell). To be specific, SSB index shown in FIG. 6 is an SSB index of the currently accessed serving cell, and PRACH resource is a PRACH resource of the currently accessed serving cell.

When the value of the second field is a seventh value, before the terminal device determines the second cell based on the first information and the first rule, the terminal device may determine, based on the second field in the first information, not to send the random access request message 1 to the first cell.

For example, when the seventh value is 0, the second field indicates that the terminal device cannot trigger random access to the currently accessed serving cell (the first cell). In this case, the currently accessed serving cell is not the candidate cell, the PDCCH used for transmission of the first information only indicates the RACH of the candidate cell, and the value of the first field corresponds to a candidate cell including a RACH.

A correspondence between the value of the first field and the candidate cell including the RACH may be determined based on the order of the candidate cells configured with the random access resource configuration, for example, similar to the correspondence described in Manner 1, and details are not described herein again.

Alternatively, the values of the first field are mapped to the physical identities of the candidate cells in descending order, for example, similar to the correspondence described in the third case, and details are not described herein again. If the mapping relationship includes the currently accessed serving cell, the value of the first field corresponding to the currently accessed serving cell (for example, the first cell) is invalid. After the terminal device is handed over from the first cell to another candidate cell, the first cell may be understood as the candidate cell, and the value of the first field corresponding to the first cell is valid.

Based on the foregoing solution, the terminal device may be explicitly indicated, by using the second field in the first information, to be handed over to a candidate cell, or trigger access to the current serving cell, so that the terminal device can be flexibly handed over between different cells.

It should be understood that sequence numbers of the foregoing processes do not mean an execution order in embodiments of this application. The execution order of the processes should be determined based on functions and internal logic of the processes, and should not be construed as any limitation on the implementation processes of embodiments of this application.

It may be understood that in the foregoing method embodiments, a method implemented by the terminal device may alternatively be implemented by a component (for example, a chip or a circuit) that may be used in the terminal, and a method implemented by the network device may alternatively be implemented by a component (for example, a chip or a circuit) that may be used in the network device. The foregoing describes in detail the method in embodiments of this application with reference to FIG. 2 to FIG. 6. The following describes communication apparatuses in embodiments of this application with reference to FIG. 7 to FIG. 10.

FIG. 7 is a diagram of a structure of a communication apparatus according to an embodiment of this application. The communication apparatus may include a processing unit 710 and a transceiver unit 720.

The communication apparatus 700 provided in this application may correspond to processes performed by the terminal device in the method embodiments in FIG. 2 to FIG. 6. For a function of each unit/module in the communication apparatus, refer to the foregoing descriptions. Detailed descriptions are properly omitted herein.

It should be understood that the communication apparatus in FIG. 7 may be a terminal device, or may be a chip or an integrated circuit that may be used in the terminal device.

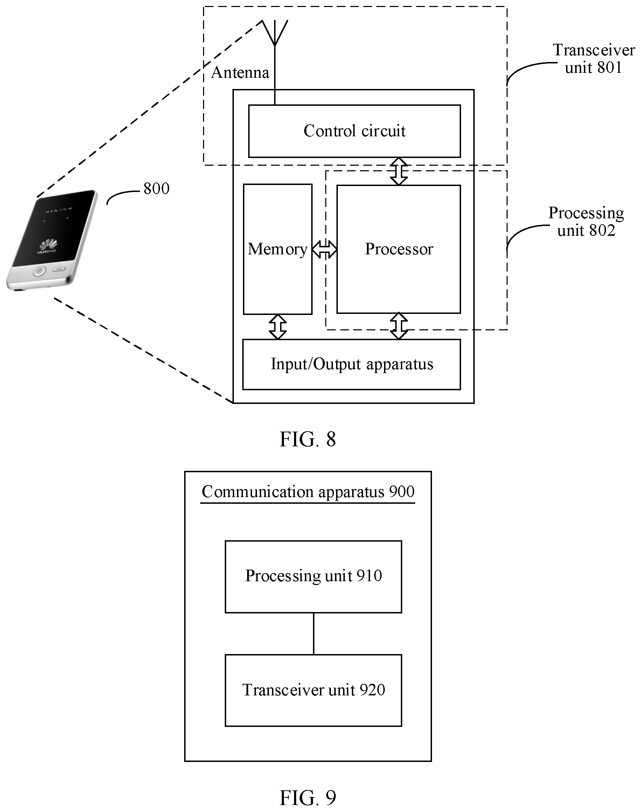

For example, the communication apparatus is the terminal device. FIG. 8 is a diagram of a structure of a terminal device according to an embodiment of this application. For ease of understanding and illustration, for example, the terminal device in FIG. 8 is a mobile phone. FIG. 8 shows only main components of the terminal device. The terminal device 800 shown in FIG. 8 includes a processor, a memory, a control circuit, and an antenna. Optionally, the terminal device may further include an input/output apparatus. It should be understood that the control circuit may be disposed in the processor, or may be located outside the processor and exists independently. This is not limited in this embodiment of this application. The processor is mainly configured to process a communication protocol and communication data, control the entire terminal device, execute a software program, and process data of the software program, for example, configured to support the terminal device in performing actions described in the foregoing method embodiments. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in the form of an electromagnetic wave. The input/output apparatus, for example, a touchscreen, a display, or a keyboard, is mainly configured to receive data input by a user and output data to the user.

After the terminal device is powered on, the processor may read the software program in a storage unit, interpret and execute instructions of the software program, and process data of the software program. When data needs to be sent wirelessly, the processor performs baseband processing on the data to be sent, and then outputs a baseband signal to a radio frequency circuit. The radio frequency circuit performs radio frequency processing on the baseband signal, and then sends a radio frequency signal outward through the antenna in the form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 8 shows only one memory and only one processor. In an actual terminal device, there may be a plurality of processors and memories. The memory may also be referred to as a storage medium, a storage device, or the like. This is not limited in this embodiment of this application. It should be understood that the memory may be integrated in the processor, or may be located outside the processor and exists independently. This is not limited in this embodiment of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 8 may integrate functions of the baseband processor and the central processing unit. A person skilled in the art may understand that the baseband processor and the central processing unit may alternatively be independent processors, and are interconnected via a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected via various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In this embodiment of this application, the antenna and the control circuit that have sending and receiving functions may be considered as a transceiver unit 801 of the terminal device 800. The transceiver unit 801 is configured to, for example, support the terminal device in performing the sending and receiving functions performed by the terminal device in the method embodiments in FIG. 2 to FIG. 6. The processor having a processing function is considered as a processing unit 802 of the terminal device 800. The processing unit 802 corresponds to the processing unit 710 in FIG. 7. As shown in FIG. 8, the terminal device 800 includes the transceiver unit 801 and the processing unit 802. The transceiver unit may also be referred to as a transceiver, a transceiver machine, a transceiver apparatus, or the like. The transceiver unit corresponds to the transceiver unit 720 in FIG. 7. Optionally, a component configured to implement a receiving function in the transceiver unit 801 may be considered as a receiving unit. A component configured to implement a sending function in the transceiver unit 801 may be considered as a sending unit. In other words, the transceiver unit 801 includes the receiving unit and the sending unit. The receiving unit may also be referred to as a receiver, an input port, a receiving circuit, or the like. The sending unit may be referred to as a transmitting machine, a transmitter, a transmitting circuit, or the like. It may be understood that the transceiver unit may also be an interface circuit.

The processing unit 802 may be configured to execute instructions stored in the memory, to control the transceiver unit 801 to receive a signal and/or send a signal, to complete the functions of the terminal device in the foregoing method embodiments. In an implementation, a function of the transceiver unit 801 may be implemented by using a transceiver circuit or a dedicated transceiver chip.

It should be understood that the terminal device 800 shown in FIG. 8 can implement the processes related to the terminal device in the method embodiments in FIG. 2 to FIG. 6. Operations and/or functions of the modules in the terminal device 800 are respectively intended to implement corresponding procedures in the foregoing method embodiments. For details, refer to the descriptions in the foregoing method embodiments. To avoid repetition, detailed descriptions are properly omitted herein.

FIG. 9 is a diagram of a structure of a communication apparatus according to an embodiment of this application. The apparatus 900 may include a processing unit 910 and a transceiver unit 920.

The communication apparatus 900 provided in this application may correspond to processes performed by the first network device in the method embodiments in FIG. 2 to FIG. 6. For a function of each unit/module in the communication apparatus, refer to the foregoing descriptions. Detailed descriptions are properly omitted herein.

It should be understood that the communication apparatus in FIG. 9 may be a network side device, or may be a chip or an integrated circuit that may be used in a network device side.

It should be understood that the network side device may represent any network device communicating with the terminal device, or may represent an entirety formed by a plurality of network devices communicating the terminal device. This is not limited in this embodiment of this application.

The network device 1000 may include one or more radio frequency units, for example, a remote radio unit (remote radio unit, RRU) 1010 and one or more baseband units (baseband unit, BBU) (which may also be referred to as a digital unit (digital unit, DU)) 1020. The RRU may be referred to as a transceiver unit 1010, and corresponds to the transceiver unit 920 in FIG. 9. Optionally, the transceiver unit may also be referred to as a transceiver machine, a transceiver circuit, a transceiver, or the like, and may include at least one antenna 1011 and a radio frequency unit 1012. The part RRU is mainly configured to send or receive a radio frequency signal and perform conversion between the radio frequency signal and a baseband signal. The part BBU is mainly configured to perform baseband processing, control a base station, and so on. The RRU and the BBU may be physically disposed together, or may be physically disposed separately, that is, a distributed base station. It may be understood that the transceiver unit may also be an interface circuit.

The BBU 1020 is a control center of the base station, may also be referred to as a processing unit 1020, may correspond to the processing unit 910 in FIG. 9, and is mainly configured to complete a baseband processing function.

In an example, the BBU 1020 may include one or more boards, and a plurality of boards may jointly support a radio access network (for example, an LTE network) of a single access standard, or may respectively support radio access networks (for example, an LTE network, a 5G network, and another network) of different access standards. The BBU 1020 further includes a memory 1021 and a processor 1022. The memory 1021 is configured to store necessary instructions and data. The processor 1022 is configured to control the base station to take a necessary action. It should be understood that the memory may be integrated in the processor, or may be located outside the processor and exists independently. This is not limited in this embodiment of this application. The memory 1021 and the processor 1022 may serve one or more boards. In other words, a memory and a processor may be disposed on each board. Alternatively, a plurality of boards may share a same memory and a same processor. In addition, a necessary circuit may be further disposed on each board.

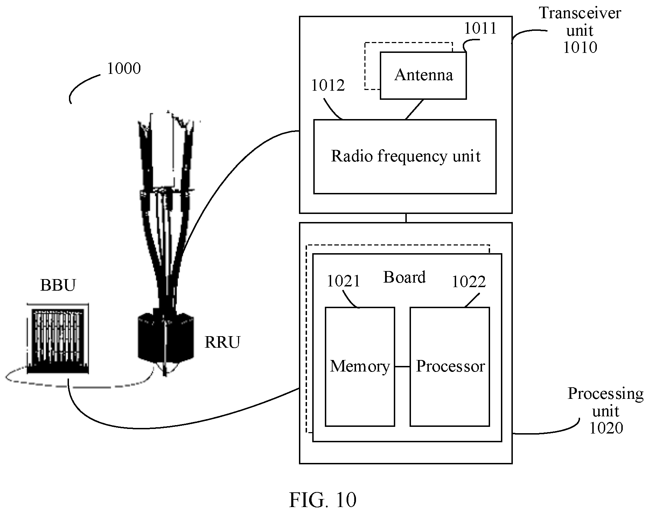

It should be understood that the network device 1000 shown in FIG. 10 can implement the processes related to the network device in the method embodiments in FIG. 2 to FIG. 6. Operations and/or functions of the modules in the network device 1000 are respectively intended to implement corresponding procedures in the foregoing method embodiments. For details, refer to the descriptions in the foregoing method embodiments. To avoid repetition, detailed descriptions are properly omitted herein.

An embodiment of this application further provides a processing apparatus, including a processor and an interface. The processor is configured to perform the communication method in any one of the foregoing method embodiments.

It should be understood that the processing apparatus may be a chip. For example, the processing apparatus may be a field-programmable gate array (field-programmable gate array, FPGA), may be an application-specific integrated circuit (application specific integrated circuit, ASIC), may be a system on chip (system on chip, SoC), may be a central processing unit (central processor unit, CPU), may be a network processor (network processor, NP), may be a digital signal processing circuit (digital signal processor, DSP), may be a micro controller unit (micro controller unit, MCU), or may be a programmable logic device (programmable logic device, PLD) or another integrated chip.

In an implementation process, steps in the foregoing methods may be completed by a hardware integrated logical circuit in the processor or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be understood that the memory in embodiments of the present invention may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

An embodiment of this application further provides a communication system, including the foregoing network device and terminal device.

An embodiment of this application further provides a computer-readable medium. The computer-readable medium stores a computer program. When the computer program is executed by a computer, the method in any one of the foregoing method embodiments is implemented.

An embodiment of this application further provides a computer program product. When the computer program product is executed by a computer, the method in any one of the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid-state disk, SSD)), or the like.

The network device and the terminal device in the foregoing apparatus embodiments correspond to the network device or the terminal device in the method embodiments. A corresponding module or unit performs a corresponding step. For example, a sending module (a transmitter) performs a sending step in the method embodiments, a receiving module (a receiver) performs a receiving step in the method embodiments, and steps other than sending and receiving may be performed by a processing module (a processor). For a function of a specific module, refer to a corresponding method embodiment. The sending module and the receiving module may form a transceiver module, and the transmitter and the receiver may form a transceiver, to jointly implement a receiving/sending function. There may be one or more processors.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

Terms such as "component", "module", and "system" used in this specification are used to represent computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application and a compute device that runs on the compute device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems via the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   receiving first information from a first network device, wherein a first cell belongs to the first network device, the first cell is a serving cell currently accessed by a terminal device, the first information comprises a first field, and the first field indicates a candidate cell, or the first field indicates the candidate cell and the serving cell currently accessed by the terminal device; and determining the first cell or a second cell based on the first information and a first rule, wherein the second cell is the candidate cell, and the first rule indicates a correspondence between the first field and the candidate cell and a correspondence between the first field and the serving cell currently accessed by the terminal device.

2. The method according to claim 1, wherein the method further comprises:
   sending a random access request message 1 to the first cell or the second cell based on the first information and the first rule.

3. The method according to claim 1 or 2, wherein the first cell is a cell configured with a random access resource configuration, and the first rule comprises:

   a first field of a first value corresponds to the first cell, and a first field of another value corresponds to a different candidate cell; and the first information comprises a first field of a second value.

4. The method according to claim 3, wherein the initiating random access to the first cell or the second cell based on the first information and the first rule comprises:

sending the random access request message 1 to the first cell based on the first field of the first value and the first rule.

5. The method according to claim 3, wherein the initiating random access to the first cell or the second cell based on the first information and the first rule comprises:
sending the random access request message 1 to the different candidate cell based on the first field of the another value and the first rule.

6. The method according to any one of claims 1 to 5, wherein the first cell is the candidate cell, the second cell is a serving cell to which the terminal device is handed over, and the first rule comprises:

a first field of a third value corresponds to the first cell, and a first field of a fourth value corresponds to the second cell, wherein
the first rule is determined based on an order of candidate cells configured with a random access resource configuration.

7. The method according to claim 6, wherein the first field of the second value corresponds to the second cell, the fourth value is a minimum value, and the second value is different from the fourth value.

8. The method according to any one of claims 1 to 5, wherein the first cell is the candidate cell, the second cell is a serving cell to which the terminal device is handed over, and the first rule comprises:
the first field of the first value corresponds to the second cell, and a first field of a fifth value corresponds to the first cell.

9. The method according to claim 8, wherein the first rule is related to one of the following:
an order of candidate cells configured with the random access resource configuration, a first order, a correspondence of the first field of the second value, and an order of identifiers of the candidate cells.

10. The method according to claim 9, wherein the order of the candidate cells configured with the random access resource configuration is determined based on an ascending order of logical identifiers of the candidate cells configured with the random access resource.

11. The method according to any one of claims 1 to 10, wherein when the first field of the first value corresponds to the serving cell currently accessed by the terminal device or corresponds to the serving cell to which the terminal device is handed over, the first value of the first field corresponding to the serving cell is a minimum value.

12. The method according to claim 11, wherein a first field of the minimum value corresponds to the second cell, and the fifth value and the third value are determined based on the order of the candidate cells configured with the random access resource configuration.

13. The method according to claim 1, wherein the first information comprises a second field, and the second field indicates whether the terminal device is to trigger sending of a random access request message 1 to the first cell.

14. The method according to claim 13, wherein when a value of the second field is a sixth value, the first field is a padding field; and
the determining the second cell based on the first information and the first rule comprises:
determining, based on the second field in the first information, to send the random access request message 1 to the first cell.

15. The method according to claim 13, wherein when a value of the second field is a seventh value, before the determining the second cell based on the first information and the first rule, the method further comprises:
determining, based on the second field in the first information, not to send the random access request message 1 to the first cell.

16. The method according to any one of claims 1 to 15, wherein the first field is a cell indicator field.

17. The method according to any one of claims 1 to 16, wherein a quantity of bits of the first field is N, N is a result obtained by rounding up a logarithm of (C+1) to a base of 2, and C represents a quantity of the candidate cells configured with the random access resource.

18. A communication method, comprising:

sending, by a first network device, first information to a terminal device, wherein the first information indicates the terminal device to determine a first cell or a second cell according to a first rule, wherein
the first cell belongs to the first network device, the first cell is a serving cell currently accessed by the terminal device, the first information comprises a first field, and the first field indicates a candidate cell, or the first field indicates the candidate cell and the serving cell currently accessed by the terminal device; and the second cell is the candidate cell, and the first rule indicates a correspondence between the first field and the candidate cell and a correspondence between the first field and the serving cell currently accessed by the terminal device.

19. The method according to claim 18, wherein the first cell is a cell configured with a random access resource configuration, and the first rule comprises:

a first field of a first value corresponds to the first cell, and a first field of another value corresponds to a different candidate cell; and
the first information comprises a first field of a second value.

20. The method according to claim 18 or 19, wherein the first cell is the candidate cell, the second cell is a serving cell to which the terminal device is handed over, and the first rule comprises:

a first field of a third value corresponds to the first cell, and a first field of a fourth value corresponds to the second cell, wherein
the first rule is determined based on an order of candidate cells configured with a random access resource configuration.

21. The method according to claim 20, wherein the first field of the second value corresponds to the second cell, the fourth value is a minimum value, and the second value is different from the fourth value.

22. The method according to claim 18 or 19, wherein the first cell is the candidate cell, the second cell is a serving cell to which the terminal device is handed over, and the first rule comprises:
the first field of the first value corresponds to the second cell, and a first field of a fifth value corresponds to the first cell.

23. The method according to claim 22, wherein the first rule is related to one of the following:
an order of candidate cells configured with the random access resource configuration, a first order, a correspondence of the first field of the second value, and an order of identifiers of the candidate cells.

24. The method according to claim 23, wherein the order of the candidate cells configured with the random access resource configuration is determined based on an ascending order of logical identifiers of the candidate cells configured with the random access resource.

25. The method according to any one of claims 18 to 24, wherein when the first field of the first value corresponds to the serving cell currently accessed by the terminal device or corresponds to the serving cell to which the terminal device is handed over, the first value of the first field corresponding to the serving cell is a minimum value.

26. The method according to claim 25, wherein a first field of the minimum value corresponds to the second cell, and the fifth value and the third value are determined based on the order of the candidate cells configured with the random access resource configuration.

27. The method according to claim 18, wherein the first information comprises a second field, and the second field indicates whether the terminal device is to trigger sending of a random access request message 1 to the first cell.

28. The method according to claim 27, wherein when a value of the second field is a sixth value, the first field is a padding field.

29. The method according to any one of claims 18 to 28, wherein the first field is a cell indicator field.

30. The method according to any one of claims 18 to 29, wherein a quantity of bits of the first field is N, N is a result obtained by rounding up a logarithm of (C+1) to a base of 2, and C represents a quantity of the candidate cells configured with the random access resource.

31. A communication apparatus, comprising a processor, wherein the memory is configured to store a computer program, and the processor is configured to run the computer program, to cause the communication apparatus to perform the method according to any one of claims 1 to 17.

32. A communication apparatus, comprising a processor, wherein the memory is configured to store a computer program, and the processor is configured to run the computer program, to cause the communication apparatus to perform the method according to any one of claims 18 to 30.

33. A computer-readable storage medium, storing a computer program, wherein when the computer program is executed by a computer, the computer is caused to implement the method according to any one of claims 1 to 17 or the method according to any one of claims 18 to 30.

34. A computer program product comprising instructions, wherein when the computer program product runs on a computer, the computer is caused to perform the method according to any one of claims 1 to 17 or the method according to any one of claims 18 to 30.

35. A chip, wherein the chip comprises a processor and a data interface, and the processor reads, through the data interface, instructions stored in a memory, to perform the method according to any one of claims 1 to 17 or the method according to any one of claims 18 to 30.

36. A communication apparatus, comprising:

a receiving module, configured to receive first information from a first network device, wherein a first cell belongs to the first network device, the first cell is a serving cell currently accessed by a terminal device, the first information comprises a first field, and the first field indicates a candidate cell, or the first field indicates the candidate cell and the serving cell currently accessed by the terminal device; and
a processing module, configured to determine the first cell or a second cell based on the first information and a first rule, wherein the second cell is the candidate cell, and the first rule indicates a correspondence between the first field and the candidate cell and a correspondence between the first field and the serving cell currently accessed by the terminal device.

37. A communication apparatus, comprising:

a sending module, configured to send first information to a terminal device, wherein the first information indicates the terminal device to determine a first cell or a second cell according to a first rule, wherein
the first cell belongs to a first network device, the first cell is a serving cell currently accessed by the terminal device, the first information comprises a first field, and the first field indicates a candidate cell, or the first field indicates the candidate cell and the serving cell currently accessed by the terminal device; and the second cell is the candidate cell, and the first rule indicates a correspondence between the first field and the candidate cell and a correspondence between the first field and the serving cell currently accessed by the terminal device.

First network
device
110

Terminal
device 130

Second network
device
120

Serving cell

Candidate cell

FIG. 1

200

Terminal device

First network
device

S201: First information

S202: Determine a first cell or a second
cell based on the first information and a
first rule

FIG. 2

| 00 | ↔ | Original serving cell (Cell PCI 123) |
| 01 | ↔ | Cell PCI 538 |
| 10 | ↔ | Cell PCI 123 |
| 11 | ↔ | Cell PCI 176 |

| 00 | ↔ | New serving cell (Cell PCI 538) |
| 01 | ↔ | Cell PCI 538 |
| 10 | ↔ | Cell PCI 123 |
| 11 | ↔ | Cell PCI 176 |

Handover to the cell PCI 538

Before handover                    ↔                    After handover

## FIG. 3

| 000 | ↔ | Original serving cell |
| 001 | ↔ | Candidate cell 1 |
| 010 | ↔ | Candidate cell 2 |
| ⋮ | | |
| 111 | ↔ | Candidate cell 7 |

| 000 | ↔ | New serving cell (Candidate cell 2) |
| 001 | ↔ | Candidate cell 1 |
| 010 | ↔ | Original serving cell |
| ⋮ | | |
| 111 | ↔ | Candidate cell 7 |

Handover to the candidate cell 2

Before handover                    ↔                    After handover

## FIG. 4

| 000 | ←→ | Original serving cell |
| 001 | ←→ | Candidate cell 1 |
| 010 | ←→ | Candidate cell 2 |

⋮

| 111 | ←→ | Candidate cell 7 |

Before handover

| 000 | ←→ | New serving cell (Candidate cell 2) |
| 001 | ←→ | Candidate cell 1 |
| 010 | ←→ | Candidate cell 3 |

⋮

| 110 | ←→ | Candidate cell 7 |
| 111 | ←→ | Original serving cell |

After handover

Handover to the candidate cell 2
←—————————→

FIG. 5

| SSB index | PRACH mask index | Random access preamble index | Cell indicator | PRACH retransmission indicator | Serving cell RACH flag |
|---|---|---|---|---|---|

FIG. 6

Communication apparatus 700

Processing unit 710

Transceiver unit 720

FIG. 7

FIG. 8

FIG. 9

FIG. 10

## INTERNATIONAL SEARCH REPORT

| International application No. |
| --- |
| **PCT/CN2024/121502** |

| A. | CLASSIFICATION OF SUBJECT MATTER |
| --- | --- |

H04W 36/00(2009.01)i

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXTC, ENTXT, DWPI, CNKI: 服务小区, 关联, 候选小区, 接入, 切换, 索引, 小区标识, 字段, 比特, 随机接入配置, handover, handoff, index, LTM, prach, serving, cell, indicator, index, identi+, bit?

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 116438908 A (BEIJING XIAOMI MOBILE SOFTWARE CO., LTD.) 14 July 2023 (2023-07-14) <br> description, paragraphs [0085]-[0103], [0198], [0235]-[0236], [0251], and [0262]-[0263] | 1-12, 16, 18-26, 29, 31-37 |
| Y | CN 115567989 A (ZTE CORP.) 03 January 2023 (2023-01-03) <br> description, paragraphs [0047] and [0056]-[0074] | 1-12, 16, 18-26, 29, 31-37 |
| A | CN 108632926 A (HUAWEI TECHNOLOGIES CO., LTD.) 09 October 2018 (2018-10-09) <br> entire document | 1-37 |
| A | CN 113271633 A (HUAWEI TECHNOLOGIES CO., LTD.) 17 August 2021 (2021-08-17) <br> entire document | 1-37 |
| A | CN 113647146 A (SAMSUNG ELECTRONICS CO., LTD.) 12 November 2021 (2021-11-12) <br> entire document | 1-37 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 November 2024** | **22 November 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/121502**

| Patent document cited in search report | | | Publication date (day/month/year) | Patent family member(s) | | | Publication date (day/month/year) |
|---|---|---|---|---|---|---|---|
| CN | 116438908 | A | 14 July 2023 | None | | | |
| CN | 115567989 | A | 03 January 2023 | None | | | |
| CN | 108632926 | A | 09 October 2018 | EP | 3589015 | A1 | 01 January 2020 |
| | | | | EP | 3589015 | A4 | 26 February 2020 |
| | | | | EP | 3589015 | B1 | 20 April 2022 |
| | | | | US | 2020022055 | A1 | 16 January 2020 |
| | | | | US | 11412432 | B2 | 09 August 2022 |
| | | | | WO | 2018171739 | A1 | 27 September 2018 |
| | | | | US | 2022353777 | A1 | 03 November 2022 |
| | | | | US | 12035197 | B2 | 09 July 2024 |
| | | | | EP | 4109971 | A1 | 28 December 2022 |
| | | | | BR | 112019019883 | A2 | 22 April 2020 |
| CN | 113271633 | A | 17 August 2021 | None | | | |
| CN | 113647146 | A | 12 November 2021 | EP | 3923633 | A1 | 15 December 2021 |
| | | | | EP | 3923633 | A4 | 27 April 2022 |
| | | | | WO | 2020197307 | A1 | 01 October 2020 |
| | | | | US | 2022191753 | A1 | 16 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311290105